# EUROPEAN PATENT SPECIFICATION

(11) **EP 1 654 320 B1**
(45) Date of publication and mention of the grant of the patent: **25.10.2006**
(21) Application number: 04744134.0
(22) Date of filing: 26.07.2004
(51) Int. Cl.: C08L 23/20

(54) **IRRADIATED BUTENE-1 POLYMER COMPOSITIONS**
BESTRAHLTE BUTEN-1-POLYMERE ENTHALTENDE ZUSAMMENSETZUNGEN
COMPOSITIONS POLYMERES IRRADIEES A BASE DE BUTENE-1

(30) Priority: 12.08.2003 US 494471 P
(43) Date of publication of application: 10.05.2006
(73) Proprietor: Basell Poliolefine Italia S.r.l., 20124 Milano (IT)
(72) Inventor: KROTKINE, Gerard, F-67000 Strasbourg (FR); DANG, Vu, A., Bear, DE 19701 (US); DALPIAZ, Michael, Glen Mills, PA 19342 (US); BUGADA, Daniele, C., Newark, DE 19711 (US)
(74) Representative: Giberti, Stefano
(86) International application number: PCT/IB2004/002483
(87) International publication number: WO 2005/014710

(56) References cited:
- US-A- 5 047 446
- US-B1- 6 306 970

## Description

This invention relates to an irradiated butene-1 polymer material having high melt strength and softness, and compositions thereof having improved crystallization properties.

It is known that butene-1 polymers provide good properties in terms of pressure resistance, impact strength and creep resistance. However, the manufacture of such materials is a slow process because of the difficulty in pelletizing the material. This difficulty is believed to be a result of the slow crystallization rate of polybutene-1 and the low hardness of the Form II (metastable) crystals of polybutene-1. Polybutene-1 exhibits polymorphism, including the crystal forms I (twinned hexagonal), II (tetragonal) and other less common forms. The metastable form II is produced by melt crystallization and then transforms into form I. The crystallization process from the unstrained melt in form II is a very slow process, that increases with increasing molecular weight. A number of heterogeneous nucleating agents for the melt crystallization of polybutene-1 have been identified in the prior art, such as graphite, organic amides, organic carboxylic acids, and aromatic sulfonic acids and their salts. These nucleating agents affect the crystallization kinetics and the resultant morphology, thus affecting hardness, tensile strength and heat distortion. Nevertheless, the melt crystallization rate is still not satisfactory for industrial exploitation and there continues to be a need for nucleating agents capable of increasing the crystallization rates of polybutene-1 and its copolymers.

It is also known that by irradiating propylene homopolymers, random copolymers of propylene with ethylene or a C₄₋₁₀ alpha-olefin, or random terpolymers of propylene with ethylene and/or a C₄₋₈ alpha-olefin according to the processes of US 4,916,198 and 5,047,446, one can obtain a propylene polymer material having high melt strength or strain hardening elongational viscosity, i.e., increased resistance to stretching when the molten propylene polymer material is elongated, absent crosslinking and/or gelation. Blends of irradiated propylene polymer materials with a non-irradiated propylene polymer material are described in US 4,916,198, and blends of non-irradiated propylene polymer materials and other polymers, such as polyethylene, are described in US 5,047,446. High melt strength ethylene polymer material has been described in US 5,508,319. The high melt strength or strain hardening elongational viscosity of the irradiated propylene polymers has made it possible to extend the application of propylene polymers beyond that which could be achieved with conventional propylene polymers because of the low melt strength of the conventional propylene polymers. However, extension of the application of these high melt strength propylene polymer materials has been limited by their lack of softness. To overcome this lack of softness, different approaches have been taken. For example, a soft polymer starting material has been irradiated to increase melt strength, or a high melt strength propylene polymer material has been blended with a soft polymer material. US 6,306,970 describes an irradiated composition containing a propylene polymer material and a low crystallinity propylene polymer, with improved melt strength and softness. Nevertheless, the use of such propylene polymers does not extend to applications, such as foams, that are better suited for butene-1 polymers.

Butene-1 polymers are known to possess good softness properties. The international patent application PCT/EP03/03593 describes non-irradiated butene-1 copolymers with improved melt strength. However, these values are still unsatisfactory for many applications, and there continues to be a need for butene-1 polymer material having enhanced melt strength, while at the same time retaining or improving softness values.

Applicants have unexpectedly found an irradiated butene-1 polymer material, having high melt strength and softness, that is also capable of providing excellent nucleation for non-irradiated butene-1 polymer materials, thereby increasing their rate of crystallization.

In one embodiment, the present invention relates to a composition comprising:
A. 0.05 wt% to 15 wt% an irradiated, butene-1 polymer material having a melt strength greater than 1 cN and a Young's modulus of less than 1000 MPa; and
B. 85 wt% to 99.95 wt% of a non-irradiated butene-1 polymer material;
   wherein the sum of components of A and B is equal to 100 wt%.
   Another embodiment of the present invention comprises an irradiated butene-1 polymer material obtained by irradiating a butene-1 polymer material chosen from:
   (a) a homopolymer of butene-1;
   (b) a copolymer or terpolymer of butene-1 with ethylene, propylene or C₅-C₁₀ alpha-olefins, the comonomer content ranging from 1 mole % to 15 mole %; and;
   (c) mixtures thereof;
   with high energy ionizing radiation at a total radiation dosage of 5 to 45 Mrad, in an environment in which the active oxygen concentration is less than 15% by volume; wherein the irradiated butene-1 polymer has a melt strength greater than 1 cN and Young's Modulus less than 1000 MPa.
   Still another embodiment of the present invention comprises a composition comprising:
C. 5 wt% to 95 wt% of an irradiated butene-1 polymer material chosen from
   (1) a homopolymer of butene-1;
   (2) a copolymer or terpolymer of butene-1 with ethylene, propylene or C₅-C₁₀ alpha-olefins, the comonomer content ranging from 1 mole % to 15 mole %; and
   (3) mixtures thereof; and
D. 5 wt% to 95 wt% of a non-irradiated propylene polymer material, and mixtures thereof;
wherein the sum of components of C and D is equal to 100 wt%.

Another embodiment of the present invention comprises a process for nucleating a non-irradiated butene-1 polymer material comprising:
(1) irradiating a butene-1 polymer chosen from:
   (a) a homopolymer of butene-1;
   (b) a copolymer or terpolymer of butene-1 with ethylene, propylene or C₅-C₁₀ alpha-olefins, the comonomer content ranging from 1 mole % to 15 mole %; and
   (c) mixtures thereof;
   with high energy ionizing radiation at a total radiation dosage of 5 to 45 Mrad, in an environment in which the active oxygen concentration is less than 15% by volume; wherein the irradiated butene-1 polymer has a melt strength greater than 1 cN and Young's Modulus less than 1000 MPa;
(2) treating the irradiated butene-1 polymer obtained in step (1) to deactivate substantially all free radicals present in the irradiated butene-1 polymer, thereby producing a high melt strength butene-1 polymer;
(3) blending the high melt strength butene-1 polymer obtained in step (2) with a non-irradiated butene-1 polymer material, thereby producing a blended polymer composition; and
(4) compounding the blended polymer composition;
wherein the crystallization rate of the non-irradiated butene-1 polymer material is thereby increased.

The starting material for making the irradiated butene-1 polymers and non-irradiated butene-1 polymer material are butene-1 polymer material chosen from:
(a) a homopolymer of butene-1;
(b) a copolymer or terpolymer of butene-1 with ethylene, propylene or C₅-C₁₀ alpha-olefins, the comonomer content ranging from 1 mole % to 15 mole %; wherein ethylene, if present, preferably has a concentration of 1 to 10 mole %, more preferably 2 mole % to 5 mole %, and the propylene or C₅-C₁₀ α-olefins, if present, preferably have concentrations of 2 mole % to 10 mole %; and;
(c) mixtures thereof.

The useful butene-1 polymer materials have a melt flow rate (MFR) from 0.5 to 150, preferably from 0.7 to 100, and most preferably from 0.9 to 75 g/10 min.

These butene-1 polymer materials, their methods of preparation and their properties are known in the art. Suitable butene-1 polymers can be obtained using Ziegler-Natta catalysts with butene-1, as described in WO 99/45043, or by metallocene polymerization of butene-1 as described in PCT/EP02/05087.

Preferably, the butene-1 polymer is a homopolymer or a copolymer containing up to 15 mole % of copolymerized propylene or 10 mole % of copolymerized ethylene, but more preferably is a homopolymer of butene-1.

Preferably, the butene-1 homopolymer has a crystallinity of at least 30% by weight when measured with wide-angle X-ray diffraction after 7 days, more preferably from 45% to aout 70% by weight, even more preferably from 55% to 60% by weight.

The butene-1 polymer materials in the compositions of the invention typically have a molecular weight of at least 50,000, preferably at least 100,000 daltons, more preferably from 120,000 daltons to 1,500,000 daltons.

In one method for preparing the irradiated butene-1 polymer material of the invention, a non-irradiated butene-1 polymer material is irradiated in an environment in which the active oxygen concentration is established and maintained at less than 15% by volume with high-energy ionizing radiation. The ionizing radiation should have sufficient energy to penetrate the mass of polymer material being irradiated to the extent desired. The ionizing radiation can be of any kind, but preferably includes electrons and gamma rays. More preferred are electrons beamed from an electron generator having an accelerating potential of 500-4,000 kilovolts. Satisfactory results are obtained at a total dose of ionizing radiation of 5 to 45 megarads ("Mrad"), preferably 10 Mrad to 36 Mrad.When dosages above 36 Mrad are employed, the butene-1 polymers have slightly reduced homogeneity. The total radiation can be administered in multiple doses of 1 Mrad to 12 Mrad each, preferably 6 Mrad to 12 Mrad each.

The butene polymer material is preferably irradiated in an environment in which the active oxygen concentration is less than 5% by volume, and more preferably less than 1% by volume. The most preferred concentration of active oxygen is less than 0.004% by volume. After irradiation, the irradiated butene-1 polymer material is maintained in such an environment, preferably for a period of up to 10 hours, more preferably 1-8 hours. The irradiated butene-1 polymer material is then treated in a free radical deactivation or quenching step, where the irradiated butene-1 polymer material is heated in an inert atmosphere, preferably under nitrogen, to a temperature preferably of at least 80°C but below the softening point of the polymer, more preferably from 90°C to 110°, and held at that temperature preferably more than 1 hour, more preferably 2 to 15 hours. Alternately, the quenching step can be performed by the addition of an additive that functions as a free radical trap, such as, for example, methyl mercaptan. Deactivation of free radicals in the quenching step prevents degradation of the polymer material, and enhances the stability of the physical properties of the irradiated material. Preferably, the quench step is performed by heating in an inert atmosphere.

The expression "active oxygen" means oxygen in a form that will react with the irradiated butene-1 polymer material and more particularly the free radicals in the material. The active oxygen content requirement of the irradiation process for butene-1 polymer material can be achieved by use of vacuum or by replacing part or all of the air in the environment by an inert gas such as, for example, nitrogen.

As used in this specification, the term "rad" means that quantity of ionizing radiation resulting in the absorption of the equivalent of 100 ergs of energy per gram of the polymer material, by a dosimeter placed at the surface of the olefin material being irradiated, whether in the form of a bed or layer of particles, or a film or sheet.

The irradiated butene-1 polymers of the invention have a melt strength greater than 1 cN due to the significant strain hardening elongational viscosity possessed by the material. Preferably, the melt strength is from 1.5 cN to 40 cN, more preferably 10 cN to 30 cN.

The irradiated butene-1 polymers of the compositions of the invention have a Young's modulus value less than 1000 MPa, preferably from 100 MPa to 900 MPa, more preferably 200 MPa to 800 MPa. When the irradiated butene-1 polymer material is a butene-1 homopolymer, the Young's modulus is preferably between 150 MPa to 300 MPa. Those skilled in the art recognize that a reduction in Young's modulus reflects an increase in the softness of the polymer material.

The irradiated butene-1 polymer normally contains less than 15 wt% gel, as determined by the hot-gel filtration test, where the polymer is dissolved in a 1 wt% xylene solution at 135°C and is then filtered through a 325 mesh stainless steel screen. Preferably, the irradiated butene-1 polymer material is less than 5 wt% gel, and most preferably less than 3 wt% gel.

Applicants have unexpectedly found that the irradiated butene-1 polymer material of the present invention may be advantageously used as a nucleating agent to increase the crystallization rate of the melt non-irradiated butene-1 polymer material. According to one embodiment, the present invention concerns a composition comprising:
A. 0.05 wt% to 15 wt% of an irradiated, butene-1 polymer material having a melt strength greater than 1 cN and a Young's modulus of less than 1000 MPa; and
B. 85 wt% to 99.95 wt% of a non-irradiated butene-1 polymer material
   wherein the sum of components of A and B is equal to 100 wt%. More specifically, in mixtures with non-irradiated butene-1 polymer material, the irradiated butene-1 polymer material is present in an amount from 0.05 wt% to 15 wt%, preferably in an amount from 0.1 wt% to 10 wt%, more preferably in an amount from 1.0 wt% to 5.0 wt%, with the remainder of the composition being the non-irradiated butene-1 polymer material.
   The irradiated butene-1 polymer material can also be part of a polymer composition that contains non-irradiated propylene polymer material. Still another embodiment of the present invention comprises a composition comprising:
C. 5 wt% to 95 wt% of an irradiated butene-1 polymer material chosen from
   (1) a homopolymer of butene-1;
   (2) a copolymer or terpolymer of butene-1 with ethylene, propylene or C₅-C₁₀ alpha-olefins, the comonomer content ranging from 1 mole % to 15 mole %, and
   (3) mixtures thereof; and
D. 5 wt% to 95 wt% of a non-irradiated propylene polymer material, and mixtures thereof;
wherein the sum of components of C and D is equal to 100 wt%.

The non-irradiated propylene polymer material may be chosen from:
(A) a homopolymer of propylene having an isotactic index greater than 80%, preferably 90% to 99.5%;
(B) a random copolymer of propylene and an olefin chosen from ethylene and C₄-C₁₀ α-olefins, containing 1 to 30 wt% of said olefin, preferably 5 to 20 wt%, and having an isotactic index greater than 60%, preferably greater than 70%;
(C) a random terpolymer of propylene and two olefins chosen from ethylene and C₄₋C₈ α -olefins, containing 1 to 30 wt% of said olefins, preferably 5 to 20 wt%, and having an isotactic index greater than 60%, preferably greater than 70%;
(D) an olefin polymer composition comprising:
   (i) 10 parts to 60 parts by weight, preferably 15 parts to 55 parts, of a propylene homopolymer having an isotactic index of at least 80%, preferably 90 to 99.5%, or a crystalline copolymer chosen from (a) propylene and ethylene, (b) propylene, ethylene and a C₄-C₈ α-olefin, and (c) propylene and a C₄-C₈ α-olefin, the copolymer having a propylene content of more than 85% by weight, preferably 90% to 99%, and an isotactic index greater than 60%;
   (ii) 3 parts to 25 parts by weight, preferably 5 parts to 20 parts, of a copolymer of ethylene and propylene or a C₄-C₈ α-olefin that is insoluble in xylene at ambient temperature; and
   (iii) 10 parts to 80 parts by weight, preferably 15 parts to 65 parts, of an elastomeric copolymer chosen from (a) ethylene and propylene, (b) ethylene, propylene, and a C₄-C₈ α-olefin, and (c) ethylene and a C₄-C₈ α-olefin, the copolymer optionally containing 0.5% to 10% by weight of a diene, and containing less than 70% by weight, preferably 10% to 60%, most preferably 12% to 55%, of ethylene and being soluble in xylene at ambient temperature and having an intrinsic viscosity of 1.5 to 10.0 dl/g;
   the total of (ii) and (iii), based on the total olefin polymer composition being from 50% to 90%, and the weight ratio of (ii)/(iii) being less than 0.4, preferably 0.1 to 0.3, wherein the composition is prepared by polymerization in at least two stages; and
(E) mixtures thereof.

The non-irradiated propylene polymer material can be present in amounts of from 5 wt% to 95 wt%, preferably 20 wt% to 90 wt%, more preferably 30 wt% to 80 wt%.

To nucleate non-irradiated butene-1 polymer material, it is first mixed with the irradiated butene-1 polymer material as described above, and optionally the non-irradiated propylene polymer material as described above, in conventional operations well known in the art; including, for example, drum tumbling, or with low or high speed mixers. The resulting composition is then compounded in the molten state in any conventional manner well known in the art, in batch or continuous mode; for example, by using a Banbury mixer, a kneading machine, or a single or twin screw extruder. The material can then be pelletized

Unless otherwise specified, the properties of the olefin polymer materials and compositions that are set forth in the following examples have been determined according to the test methods reported below:

Melt flow rate ("MFR") was determined by ASTM D1238 at 230°C at 2.16 kg, and is reported in units of dg/min. Young's modulus was measured by ASTM D1708-96. Xylene solubles at room temperature ("XSRT") was determined by dissolving 2.5 g of polymer in 250 ml of xylene at room temperature in a vessel equipped with a stirrer, and heating at 135°C with agitation for 20 minutes. The solution was cooled to 25°C while continuing the agitation, and then left to stand without agitation for 30 minutes so that the solids can settle. The solids were filtered with filter paper, the remaining solution evaporated by treating it with a nitrogen stream, and the solid residue was vacuum dried at 80°C until a constant weight was reached.

Melt strength and Velocity at break was measured on a Goettfert Rheotens apparatus at 200°C. The Rheotens apparatus consisted of two counter-rotating wheels mounted on a sensitive balance beam. A melt strand was extruded from the capillary die and pulled between the rotating wheels until the strand ruptures. The pulling velocity was constant initially to establish a baseline of the force. A constant acceleration was then applied. The maximum force measured during the test was taken as the melt strength. The extensibility of the melt was represented by the velocity at break.

Weight average and number average molecular weight were measured by Gel Permeation Chromatography (GPC), using a GPC Waters-200 commercially available from Polymer Laboratories.

Unless otherwise specified, all references to parts, percentages and ratios in this specification refer to percentages by weight.

### Example 1

This example illustrates the preparation of an irradiated butene-1 polymer material.

Polybutene BR200 polymer (butene-1 homopolymer by Basell USA Inc., having a melt flow of 0.9 g/10 min. at 230°C and 2.16 kg, and weight average molecular weight of 270,000 daltons) was introduced into a glass reaction tube and purged with nitrogen for 1 hour to ensure that the polymer was under an oxygen-free environment before the radiation treatment. After purging, the reaction tube was submerged in ice to prevent melting of the polymer during irradiation, and was then irradiated under an electron beam at 9 Mrad. The irradiated polymer was maintained in an oxygen-free environment at room temperature for 8 hours and finally heated at 100°C for 12 hrs before being exposed to air.

### Example 2

This example illustrates the preparation of an irradiated butene-1 polymer material.

A glass reaction tube containing the butene-1 homopolymer of Example 1 was purged with nitrogen for 1 hour to ensure that the polymer was under an oxygen-free environment before the radiation treatment. After purging, the reaction tube was submerged in ice to prevent melting of the polymer during irradiation, and was then irradiated 2 times under an electron beam at 9 Mrad for each pass, providing a total dosage of ionizing radiation of 18 Mrad. The irradiated polymer was maintained in an oxygen free environment for 8 hours and finally heated at 100°C for 12 hrs before being exposed to air.

### Example 3

This example illustrates the preparation of an irradiated butene-1 polymer material.

An irradiated butene-1 polymer material was prepared according to Example 2 except that the reaction tube containing the butene-1 homopolymer was irradiated 3 times at 9 Mrad for each pass, providing a total dosage of ionizing radiation of 27 Mrad.

### Example 4

This example illustrates the preparation of an irradiated butene-1 polymer material.

An irradiated butene-1 polymer material was prepared according to Example 2 except that the reaction tube containing the butene polymer material was irradiated 4 times at 9 Mrad for each pass, providing a total dosage of ionizing radiation of 36 Mrad.

The test results for the non-irradiated Polybutene BR200 and the irradiated butene-1 polymer material obtained in Examples 1 to 4 are set forth in Table I.

| **Table 1** | | | | | |
|---|---|---|---|---|---|
| **Examples** | **Polybutene BR200** | **Ex.1** | **Ex.2** | **Ex.3** | **Ex.4** |
| | | | | | |
| Melt Strength, cN | 0.9 | 1.3 | 1.3 | 21 | 24 |
| Velocity at break, mm/sec | 90 | 35 | 36 | 37 | 35 |
| MFR, dg/min | 0.94 | 34 | 55 | 14 | 4.5 |
| XSRT, % | 96.8 | 98.4 | 97.4 | 89.1 | 75.9 |
| Mw | 678,000 | 271,000 | 341,000 | 427,000 | |
| Mn | 71,000 | 47,000 | 37,000 | 32,000 | |
| Mw/Mn | 9.5 | 5.8 | 8.7 | 13.3 | |
| Young's Modulus | 284 | 272 | 242 | 216 | 181 |

As is evident from the data in Table I, the irradiated butene-1 polymer material demonstrates an increase in melt strength and softness over the non-irradiated butene-1 polymer material.

### Examples 5-17

A series of samples were prepared by blending the non-irradiated butene-1 homopolymer Polybutene BR200, used in Example 1, with the irradiated samples obtained in Examples 1 to 4. The irradiated and non-irradiated butene-1 polymer materials were blended at room temperature and extruded at 204°C in a Berstorff 42 mm extruder, commercially available from Berstorff GmbH. Differential Scanning Calorimetry ("DSC") was performed on a TA-2920 differential scanning calorimeter, commercially available from TA Instruments. The DSC method included a ten-day hold after the first heat and cool cycle. The compositions and peak cooling temperature of the DSC cooling cycles are summarized in Table II.

| **Table II** | | | | | | |
|---|---|---|---|---|---|---|
| **Example** | **Polybutene BR200, Wt%** | **Polymer of Ex. 1, Wt%** | **Polymer of Ex. 2, Wt%** | **Polymer of Ex. 3, Wt%** | **Polymer of Ex. 4, Wt%** | **Peak Cooling Temp., °C** |
| **Example 5** | 100.0 | | | | | 76.26 |
| **Example 6** | 99.9 | | | | 0.1 | 83.38 |
| **Example 7** | 99.5 | | | | 0.5 | 84.36 |
| **Example 8** | 99.0 | | | | 1.0 | 84.70 |
| **Example 9** | 97.0 | | | | 3.0 | 85.22 |
| **Example 10** | 95.0 | | | | 5.0 | 85.34 |
| **Example 11** | 90.0 | | | | 10.0 | 86.28 |
| **Example 12** | 99.5 | 0.5 | | | | 86.99 |
| **Example 13** | 90.0 | 10.0 | | | | 89.11 |
| **Example 14** | 99.5 | | 0.5 | | | 87.53 |
| **Example 15** | 90.0 | | 10.0 | | | 88.63 |
| **Example 16** | 99.5 | | | 0.5 | | 86.32 |
| **Example 17** | 90.0 | | | 10.0 | | 87.60 |

As is evident from the data in Table II, the addition of the irradiated butene-1 polymers of the invention increase the crystallization rate of the non-irradiated butene-1 polymer compositions, as evidenced by the increase in the DSC peak cooling temperature.

Other features, advantages and embodiments of the invention disclosed herein will be readily apparent to those exercising ordinary skill after reading the foregoing disclosures. In this regard, while specific embodiments of the invention have been described in considerable detail, variations and modifications of these embodiments can be effected without departing from the spirit and scope of the invention as described and claimed.

## Claims

1. A composition comprising:
A. 0.05 wt% to 15 wt% of an irradiated butene-1 polymer material having a melt strength greater than 1 cN and a Young's modulus of less than 1000 MPa; and
B. 85 wt% to 99.95 wt% of a non-irradiated butene-1 polymer material;
wherein the sum of components of A and B is equal to 100 wt%.

2. The composition of claim 1 wherein the irradiated butene-1 polymer material is present in an amount from 0.1 wt% to 10 wt%.

3. The composition of claim 1 wherein the irradiated butene-1 polymer material is chosen from:
(a) a homopolymer of butene-1;
(b) copolymers or terpolymers of butene-1 with ethylene, propylene or C₅-C₁₀ alpha-olefins, the comonomer content ranging from 1 mole % to 15 mole %; and;
(c) mixtures thereof.

4. The composition of claim 3 wherein the irradiated butene-1 polymer material is a homopolymer of butene-1.

5. An irradiated butene-1 polymer material obtained by irradiating a butene-1 polymer material chosen from:
(a) a homopolymer of butene-1;
(b) copolymers or terpolymers of butene-1 with ethylene, propylene or C₅-C₁₀ alpha-olefins, the comonomer content ranging from 1 mole % to 15 mole %; and
(c) mixtures thereof;
with high energy ionizing radiation at a total radiation dosage of 5 to 45 Mrad in an environment in which the active oxygen concentration is less than 15 % by volume, thereby forming an irradiated butene-1 polymer material; wherein the irradiated butene-1 polymer has a melt strength greater than 1 cN and Young's Modulus less than 1000 MPa.

6. The irradiated butene-1 polymer material of claim 5 wherein the total radiation dosage is from 10 Mrad to 36 Mrad.

7. The irradiated butene-1 polymer material of claim 5 wherein the polymer is a homopolymer of butene-1.

8. A composition comprising:
C. 5 wt% to 95 wt% of an irradiated butene-1 polymer material chosen from:
(1) a homopolymer of butene-1;
(2) copolymers or terpolymers of butene-1 with ethylene, propylene or C₅-C₁₀ alpha-olefins, the comonomer content ranging from 1 mole % to 15 mole %; and
(3) mixtures thereof;
having a melt strength greater than 1 cN and a Young's modulus of less than 1000 MPa; and
D. 5 wt% to 95 wt% of a non-irradiated propylene polymer material;
wherein the sum of components of C and D is equal to 100 wt%.

9. The composition of claim 8 wherein the irradiated butene-1 polymer material is present in an amount from 20 wt% to 90 wt%.

10. The composition of claim 8 wherein the irradiated butene-1 polymer material is a homopolymer of butene-1.

11. A process for nucleating a non-irradiated butene-1 polymer material comprising:
(1) irradiating a butene-1 polymer chosen from:
(a) a homopolymer of butene-1;
(b) copolymers or terpolymers of butene-1 with ethylene, propylene or C₅-C₁₀ alpha-olefins, the comonomer content ranging from 1 mole % to 15 mole %; and
(c) mixtures thereof;
with high energy ionizing radiation at a total radiation dosage of 5 to 45 Mrad, in an environment in which the active oxygen concentration is less than 15 % by volume;
wherein the irradiated butene-1 polymer has a melt strength greater than 1 cN and Young's Modulus less than 1000 MPa;
(2) treating the irradiated butene-1 polymer obtained in step (1) to deactivate substantially all free radicals present in the irradiated butene-1 polymer, thereby producing a high melt strength butene-1 polymer;
(3) blending the high melt strength butene-1 polymer obtained in step (2) with a non-irradiated butene-1 polymer material, thereby producing a blended polymer composition; and
(4) compounding the blended polymer composition;
wherein the crystallization rate of the non-irradiated butene-1 polymer material is increased.

12. The process according to claim 11 wherein the total radiation dose is from 10 Mrad to 36 Mrad.

13. The process according to claim 11 wherein the butene-1 polymer material is a homopolymer of butene-1.

## Patentansprüche

1. Zusammensetzung, enthaltend:
A. 0,05 bis 15 Gew.-% eines bestrahlten Buten-1-Polymermaterials mit einer Schmelzefestigkeit von mehr als 1 cN und einem Youngschen Elastizitätsmodul von weniger als 1000 MPa und
B. 85 bis 99,95 Gew.-% eines nicht bestrahlten Buten-1-Polymermaterials,
wobei sich die Summe der Komponenten A und B auf 100 Gew.-% beläuft.

2. Zusammensetzung nach Anspruch 1, in der das bestrahlte Buten-1-Polymermaterial in einer Menge von 0,1 bis 10 Gew.-% vorliegt.

3. Zusammensetzung nach Anspruch 1, in der das bestrahlte Buten-1-Polymermaterial unter
(a) einem Homopolymer von Buten-1;
(b) Copolymeren oder Terpolymeren von Buten-1 mit Ethylen, Propylen oder C₅-C₁₀-alpha-Olefinen, wobei der Comonomerengehalt im Bereich von 1 Mol-% bis 15 Mol-% liegt; und
(c) Mischungen davon
ausgewählt ist.

4. Zusammensetzung nach Anspruch 3, in der es sich bei dem bestrahlten Buten-1-Polymermaterial um ein Homopolymer von Buten-1 handelt.

5. Bestrahltes Buten-1-Polymermaterial, erhalten durch Bestrahlen eines unter
(a) einem Homopolymer von Buten-1;
(b) Copolymeren oder Terpolymeren von Buten-1 mit Ethylen, Propylen oder C₅-C₁₀-alpha-Olefinen, wobei der Comonomerengehalt im Bereich von 1 Mol-% bis 15 Mol-% liegt; und
(c) Mischungen davon
ausgewählten Buten-1-Polymermaterials mit energiereicher ionisierender Strahlung bei einer Strahlungsgesamtdosis von 5 bis 45 Mrad in einer Umgebung, in der die Konzentration an aktivem Sauerstoff weniger als 15 Vol.-% beträgt, was ein bestrahltes Buten-1-Polymermaterial ergibt; wobei das bestrahlte Buten-1-Polymer eine Schmelzefestigkeit von mehr als 1 cN und einen Youngschen Elastizitätsmodul von weniger als 1000 MPa aufweist.

6. Bestrahltes Buten-1-Polymermaterial nach Anspruch 5, in dem die Strahlungsgesamtdosis 10 bis 36 Mrad beträgt.

7. Bestrahltes Buten-1-Polymermaterial nach Anspruch 5, in dem es sich bei dem Polymer um ein Homopolymer von Buten-1 handelt.

8. Zusammensetzung, enthaltend:
C. 5 bis 95 Gew.-% eines unter
(1) einem Homopolymer von Buten-1;
(2) Copolymeren oder Terpolymeren von Buten-1 mit Ethylen, Propylen oder C₅-C₁₀-alpha-Olefinen, wobei der Comonomerengehalt im Bereich von 1 Mol-% bis 15 Mol-% liegt; und
(3) Mischungen davon
ausgewählten bestrahlten Buten-1-Polymermaterials mit einer Schmelzefestigkeit von mehr als 1 cN und einem Youngschen Elastizitätsmodul von weniger als 1000 MPa und
D. 5 bis 95 Gew.-% eines nicht bestrahlten Propylenpolymermaterials,
wobei sich die Summe der Komponenten C und D auf 100 Gew.-% beläuft.

9. Zusammensetzung nach Anspruch 8, in der das bestrahlte Buten-1-Polymermaterial in einer Menge von 20 bis 90 Gew.-% vorliegt.

10. Zusammensetzung nach Anspruch 8, in der es sich bei dem bestrahlten Buten-1-Polymermaterial um ein Homopolymer von Buten-1 handelt.

11. Verfahren zur Nukleierung eines nicht bestrahlten Buten-1-Polymermaterials, bei dem man
(1) ein unter
(a) einem Homopolymer von Buten-1;
(b) Copolymeren oder Terpolymeren von Buten-1 mit Ethylen, Propylen oder C₅-C₁₀₋alpha-Olefinen, wobei der Comonomerengehalt im Bereich von 1 Mol-% bis 15 Mol-% liegt; und
(c) Mischungen davon
ausgewähltes Buten-1-Polymer in einer Umgebung, in der die Konzentration an aktivem Sauerstoff weniger als 15 Vol.-% beträgt, mit energiereicher ionisierender Strahlung bei einer Strahlungsgesamtdosis von 5 bis 45 Mrad bestrahlt; wobei das bestrahlte Buten-1-Polymer eine Schmelzefestigkeit von mehr als 1 cN und einen Youngschen Elastizitätsmodul von weniger als 1000 MPa aufweist;
(2) das in Schritt (1) erhaltene bestrahlte Buten-1-Polymer zur Desaktivierung praktisch aller in dem bestrahlten Buten-1-Polymer vorliegenden Radikale behandelt, wodurch man ein Buten-1-Polymer mit hoher Schmelzefestigkeit erhält;
(3) das in Schritt (2) erhaltene Buten-1-Polymer mit hoher Schmelzefestigkeit mit einem nicht bestrahlten Buten-1-Polymermaterial vermischt, wodurch man eine vermischte Polymerzusammensetzung erhält; und
(4) die vermischte Polymerzusammensetzung compoundiert;
wobei die Kristallisationsrate des nicht bestrahlten Buten-1-Polymermaterials erhöht wird.

12. Verfahren nach Anspruch 11, bei dem die Strahlungsgesamtdosis 10 bis 36 Mrad beträgt.

13. Verfahren nach Anspruch 11, bei dem es sich bei dem Buten-1-Polymermaterial um ein Homopolymer von Buten-1 handelt.

## Revendications

1. Composition comprenant :
A. 0,05 % en poids à 15 % en poids d'un matériau polymère de butène-1 irradié ayant une résistance à la fusion supérieure à 1 cN et un module de Young inférieur à 1 000 MPa ; et
B. 85 % en poids à 99,95 % en poids d'un matériau polymère de butène-1 non irradié ;
dans laquelle la somme des composants de A et B est égale à 100 % en poids.

2. Composition selon la revendication 1, dans laquelle le matériau polymère de butène-1 irradié est présent en une quantité de 0,1 % en poids à 10 % en poids.

3. Composition selon la revendication 1, dans laquelle le matériau polymère de butène-1 irradié est choisi parmi :
(a) un homopolymère de butène-1 ;
(b) des copolymères ou des terpolymères de butène-1 avec de l'éthylène, du propylène ou des alpha-oléfines en C₅ à C₁₀, la teneur en comonomère variant de 1 % en mole à 15 % en mole, et ;
(c) des mélanges de ceux-ci.

4. Composition selon la revendication 3, dans laquelle le matériau polymère de butène-1 irradié est un homopolymère de butène-1.

5. Matériau polymère de butène-1 irradié obtenu par irradiation d'un matériau polymère de butène-1 choisi parmi :
(a) un homopolymère de butène-1 ;
(b) des copolymères ou des terpolymères de butène-1 avec de l'éthylène, du propylène ou des alpha-oléfines en C₅ à C₁₀, la teneur en comonomère variant de 1 % en mole à 15 % en mole ; et
(c) des mélanges de ceux-ci ;
avec un rayonnement ionisant d'énergie élevée à une dose de rayonnement de 5 à 45 Mrad dans un environnement dans lequel la concentration en oxygène actif est inférieure à 15 % en volume, formant ainsi un matériau polymère de butène-1 irradié ; dans lequel le polymère de butène-1 irradié a une résistance à la fusion supérieure à 1 cN et un module de Young inférieur à 1 000 MPa.

6. Matériau polymère de butène-1 irradié selon la revendication 5, dans lequel la dose de rayonnement totale est de 10 Mrad à 36 Mrad.

7. Matériau polymère de butène-1 irradié selon la revendication 5, dans lequel le polymère est un homopolymère de butène-1.

8. Composition comprenant :
C. 5 % en poids à 95 % en poids d'un matériau polymère de butène-1 irradié choisi parmi :
(1) un homopolymère de butène-1 ;
(2) des copolymères ou des terpolymères de butène-1 avec de l'éthylène, du propylène ou des alpha-oléfines en C₅ à C₁₀, la teneur en comonomère variant de 1 % en mole à 15 % en mole ; et
(3) des mélanges de ceux-ci ;
ayant une résistance à la fusion supérieure à 1 cN et un module de Young inférieur à 1 000 MPa ; et
D. 5 % en poids à 95 % en poids d'un matériau polymère de propylène non irradié ;
dans laquelle la somme des composants de C et D est égale à 100 % en poids.

9. Composition selon la revendication 8, dans laquelle le matériau polymère de butène-1 irradié est présent en une quantité de 20 % en poids à 90 % en poids.

10. Composition selon la revendication 8, dans laquelle le matériau polymère de butène-1 irradié est un homopolymère de butène-1.

11. Procédé pour la nucléation d'un matériau polymère de butène-1 non irradié comprenant :
(1) l'irradiation d'un polymère de butène-1 choisi parmi :
(a) un homopolymère de butène-1 ;
(b) des copolymères ou des terpolymères de butène-1 avec de l'éthylène, du propylène ou des alpha-oléfmes en C₅ à C₁₀, la teneur en comonomère variant de 1 % en mole à 15 % en mole ; et
(c) des mélanges de ceux-ci ;
avec un rayonnement ionisant d'énergie élevée à une dose de rayonnement total de 5 à 45 Mrad dans un environnement dans lequel la concentration en oxygène actif est inférieure à 15 % en volume ; dans lequel le polymère de butène-1 irradié a une résistance à la fusion supérieure à 1 cN et un module de Young inférieur à 1000 MPa.
(2) le traitement du polymère de butène-1 irradié obtenu dans l'étape (1) pour désactiver sensiblement tous les radicaux libres présents dans le polymère de butène-1 irradié, produisant ainsi un polymère de butène-1 de résistance à la fusion élevée ;
(3) le mélange du polymère de butène-1 de résistance à la fusion élevée obtenu dans l'étape (2) avec un matériau polymère de butène-1 non irradié, produisant ainsi une composition de polymères mélangés ; et
(4) la composition de la composition de polymères mélangés ;
dans lequel le taux de cristallisation du matériau polymère de butène-1 non irradié est accru.

12. Procédé selon la revendication 11, dans lequel la dose de rayonnement total est de 10 Mrad à 36 Mrad.

13. Procédé selon la revendication 11, dans lequel le matériau polymère de butène-1 est un homopolymère de butène-1.
